# EUROPÄISCHE PATENTSCHRIFT

(11) **EP 3 057 275 B1**
(45) Veröffentlichungstag und Bekanntmachung des Hinweises auf die Patenterteilung: **05.08.2020**
(21) Anmeldenummer: 16152904.5
(22) Anmeldetag: 27.01.2016
(51) Int. Cl.: H04L 12/931, H04L 12/933

(54) **ERWEITERTE VERTEILEREINHEIT**
EXTENDED DISTRIBUTION UNIT
UNITE DE DISTRIBUTION ELARGIE

(30) Priorität: 10.02.2015 AT 500982015
(43) Veröffentlichungstag der Anmeldung: 17.08.2016
(73) Patentinhaber: TTTech Computertechnik AG, 1040 Wien (AT)
(72) Erfinder: Poledna, Stefan, 3400 Klosterneuburg (AT); Kopetz, Hermann, 2500 Baden (AT); Schwarz, Martin, 2700 Wr. Neustadt (AT)
(74) Vertreter: Patentanwaltskanzlei Matschnig & Forsthuber OG

(56) Entgegenhaltungen:
- WO-A1-99/66680
- US-B1- 7 480 303

## Beschreibung

Die Erfindung betrifft eine Verfahren zur Verarbeitung von Echtzeitdaten in einer Verteilereinheit eines verteilten Computersystems, welches Computersystem eine Vielzahl von Knotenrechnern und Verteilereinheiten umfasst, wobei die Verteilereinheit zusätzlich zu einer *Switching Engine (SE)* und einem *Switching Speicher (SS)* einen oder mehrere *Applikationsrechner* mit je einer oder mehreren *Applikationszentraleinheiten* und mit je einer oder mehreren *Applikationsspeichern (AS)* enthält.

Weiters betrifft die Erfindung eine Verteilereinheit zur Bearbeitung von Echtzeitdaten in einem verteilten Computersystem, wobei das Computersystem eine Vielzahl von Knotenrechnern und Verteilereinheiten umfasst, wobei die Verteilereinheit zusätzlich zu einer *Switching Engine (SE)* und einem *Switching Speicher (SE)* eine oder mehrere *Applikationsrechner* mit je einer oder mehreren *Applikationszentraleinheiten* und *Applikationsspeichern* (AS) enthält.

Außerdem betrifft die Erfindung ein verteiltes Computersystem, welches Computersystem eine Vielzahl von Knotenrechnern und Verteilereinheiten umfasst.

In einigen technischen Anwendungen, z.B. dem computergesteuerten Führen eines Fahrzeuges, in denen eine Anzahl von diversen bilderfassenden Sensoren (z.B. Kamera, Radar, Laser) zum Einsatz kommen, müssen im steuernden verteilten Computersystem, bestehend aus einer Anzahl von Knotenrechnern und einem die Knotenrechner verbindenden Kommunikationssystem, große Datenmengen schnell transportiert und verarbeitet werden. In vielen bilderfassenden Sensoren wird eine erste Vorverarbeitung der periodisch erfassten Daten in einem dem Sensor zugeordneten Knotenrechner vorgenommen. Die Ergebnisse der Vorverarbeitung werden über eine Verteilereinheit von dem Sensor-Knotenrechner an einen Knotenrechner übertragen, der die Fusion der diversen Sensordaten vornimmt.

Eine dem Stand der Technik entsprechende Verteilereinheit besteht aus einer Anzahl von *Ports* zur Ankopplung der ein- und ausgehenden Datenleitungen zu den die Daten sendenden und empfangenden Knotenrechnern, einer zentralen *Switching Engine* (SE), die die Verteilung der eingehenden Daten vornimmt und einem *Switching Speicher* (SS), in dem eingehende Daten im Intervall zwischen dem Zeitpunkt des Dateneingangs und dem Zeitpunkt des Datenausgangs zwischengespeichert werden.

Die Druckschrift WO 99/66680 A1, offenbart eine universell einsetzbare programmierbare Plattform zur Beschleunigung von Netzwerkinfrastrukturanwendungen durch die Verwendung von DMA-gesteuerten Übertragungen zwischen PCI-Host-Schnittstellen und PCI-Bridges, um die Paketverarbeitung an einen Anwendungsprozessor zu übergeben.

In einem zeitgesteuerten Kommunikationssystem, in dem das Ereignis des Beginns des Sendens einer Nachricht vom Fortschreiten der globalen Zeit abgeleitet wird, haben alle Knotenrechner und die Verteilereinheiten Zugriff auf eine globale Zeit von bekannter Genauigkeit. Entsprechend [4], S.62 lassen sich aus der bekannten Genauigkeit der globalen Zeit die Parameter für den Aufbau einer *sparse* globalen Zeitbasis ableiten. In einer *sparse globalen Zeitbasis* wird ein minimaler Abstand zwischen zeitgesteuerten Ereignissen festgelegt, so dass trotz der Digitalisierungsfehler der digitalen Zeitmessung und der immer vorhandenen Synchronisationsfehler der Uhrensynchronisation eine konsistente temporale Ordnung aller zeitgesteuerten Ereignisse in allen Knotenrechnern und Verteilereinheiten des verteilten Computersystem erreicht werden kann.

In einer zeitgesteuerten Verteilereinheit ist in der SE ein *a priori* erstellter *Zeitplan* gespeichert, der angibt, zu welchen periodischen Zeitpunkten der sparse Zeitbasis Daten vermittelt werden müssen. Die von einem *Eingangsport* kommenden Daten werden in einem Bereich des SS solange zwischengespeichert, bis sie-entsprechend einem gegebenen Zeitplan-an einen *Ausgangsport* ausgegeben werden.

Es ist eine Aufgabe der Erfindung, eine Lösung dafür anzugeben, wie das Antwortzeitverhalten eines oben erwähnten verteilten Computersystems verbessert werden kann.

Diese Aufgabe wird mit einem eingangs erwähnten Verfahren dadurch gelöst, dass die Switching Engine der Verteilereinheit bei Eintreffen einer für einen *Applikationsrechner* bestimmten Nachricht an einem ihrer Ports diese Nachricht über eine Direct Memory Access (DMA) Einheit, die zwischen dem Switching Speicher und dem Applikationsspeicher des adressierten Applikationsrechners angeordnet ist und unter der Kontrolle der Switching Engine steht, an den adressierten Applikationsrechner weiterleitet.

Weiters wird diese Aufgabe mit einer eingangs erwähnten Verteilereinheit dadurch gelöst, dass erfindungsgemäß zwischen dem Switching Speicher der Verteilereinheit und den Applikationsspeichern (AS) der Applikationsrechner DMA Einheiten angeordnet sind, und wo Kontrollleitungen von der Switching Engine der Verteilereinheit zu jeder DMA Einheit führen, wobei über diese Kontrollleitungen von der Switching Engine Befehle an die DMA Einheiten zum DMA-Transfer von Speicherbereichen des Switching Speichers zu Speicherbereichen eines Applikationsspeichers zu Speicherbereichen eines Applikationsspeichers, und zum Transfer von Speicherbereichen des Applikationsspeichers zu Speicherbereichen eines Switching Speichers transportiert werden können. Unter dem Transfer eines Speichers bzw. von Speicherbereichen ist insbesondere der Transfer von Daten aus diesem Speicher bzw. diesen Speicherbereichen zu verstehen.

Schließlich wird die Erfindung mit einem eingangs erwähnten Computersystem dadurch gelöst, dass erfindungsgemäß eine, mehrere oder alle Verteilereinheit entsprechend wie oben stehend erweitert sind.

Erfindungsgemäß wird somit eine Verteilereinheit derart erweitert, dass über die Verteilereinheit geführte Datenströme direkt in der erweiterten Verteilereinheit verarbeitet werden können.

Die Verteilereinheit wird dabei wie folgt erweitert: In der Verteilereinheit wird zusätzlich zu den Ports, der SE und dem SS eine Anzahl von Applikationsrechnern (AR), jeder bestehend aus einer oder mehreren CPUs (*Applikationszentraleinheit*) und einem zugeordneten Applikationsspeicher AS, vorgesehen. Zwischen jedem AS und dem SS ist eine *Direct-Memory Access (DMA)* Einheit angeordnet, die von der SE angesteuert werden kann. Wenn eine auf einem Eingangsport der Verteilereinheit eintreffende Nachricht an einen der AR gesendet werden soll, so wird die SE die entsprechende DMA ansteuern, um einen direkten Datentransport von dem entsprechenden Bereich des SS in den des AS zu veranlassen.

Wenn eine in einem Speicherbereich eines AS abgelegte Nachricht an einen Ausgangsport der Verteilereinheit übertragen werden soll, so wird z.B. eine zeitgesteuerte SE in einem in einem *Zeitplan* vorgegebenen Zeitintervall die entsprechende DMA ansteuern, um einen direkten Datentransport von dem spezifizierten Bereich des AS zu dem spezifizierten Ausgangsport zu veranlassen.

Wenn eine in einem Speicherbereich eines AS abgelegte Nachricht an eine Ausgangsport der Verteilereinheit übertragen werden soll, so wird z.B. in einem ereignisgesteuerten System die SE übe eine zusätzliche Kontrollleitung von dem betroffenen Applikationsrechner informiert, von wo die Nachricht abzuholen ist. Die SE befiehlt der entsprechenden DMA den Datentransport von dem spezifizierten Bereich des AS zu dem spezifizierten Ausgangsport zu veranlassen.

Der Schutzumfang wird durch das Verfahren nach Anspruch 1, die Vorrichtung nach Anspruch 6 und das System nach Anspruch 9 definiert. Weitere Ausführungsformen im Folgenden angeführt:
- in einem zeitgesteuerten Computersystem haben die Switching Engine und alle *Applikationsrechner* der Verteilereinheit Zugriff auf eine *globale sparse Zeitbasis,* wobei die Switching Engine der Verteilereinheit zu den in einem *a priori* erstellten Zeitplan enthaltenen globalen Zeitpunkten an eine zwischen dem Switching Speicher und einem *Applikationsrechner* angeordnete DMA Einheit bzw. an jede der zwischen dem Switching Speicher und einem *Applikationsrechner* angeordneten DMA Einheiten den Befehl zum Start eines DMA Transfers von Daten aus dem *Switching Speicher* zu einem *Applikationsspeicher* und zum Start eines DMA Transfers von Daten aus einem *Applikationsspeicher* zu dem *Switching Speicher* ausgibt. In einer Verteilereinheit ist somit ein Applikationsrechner integriert ist und die DMA Einheit zwischen dem Switching Speicher und dem Speicher des Applikationsrechners steht unter der Kontrolle der Switching Engine, und die Zeitpunkte des Datentransfers vom Switching Speicher zum Speicher des Applikationsrechners und umgekehrt werden vom Fortschreiten der globalen Zeit abgeleitet;
- die Quell- und Zieladressen der Daten, die von der DMA zwischen dem Switching Speicher und einem Applikationsspeicher oder umgekehrt zu transportieren sind, sind in einem Zeitplan der Switching Engine enthalten;
- in einem ereignisgesteuerten Computersystem teilt ein *Applikationsrechner* über eine zwischen der Switching Engine und einem Applikationsrechner vorhandenen Kontrollleitung der Switching Engine mit, aus welchem Speicherbereich des Applikationsspeichers eine ereignisgesteuerte Nachricht über die Verteilereinheit zu versenden ist, und in Folge die Switching Engine der zwischen dem Applikationsspeicher und dem Switching Speicher angeordneten DMA Einheit befiehlt, die spezifizierten Daten von dem Applikationsspeicher in den Switching Speicher zu transportieren; zu jedem Applikationsrechner, welcher Nachrichten ereignisgesteuert oder zeit- und ereignisgesteuert übertragen können soll, ist eine solche Kontrollleitung von der Switching Engine notwendig;
- keine CPU des Applikationsrechners nimmt während der Transportintervalle, das sind insbesondere die Intervalle für den Transport von Nachrichten von dem Switching Speicher (140) zu dem Applikationsrechner (220), einen Zugriff auf den vom Transport betroffen Bereich seines Speichers vor;
- in der erfindungsgemäßen Verteilereinheit werden sowohl zeitgesteuerte als auch ereignisgesteuerte Nachrichten transportiert und verarbeitet; vorzugsweise kann also die Verteilereinheit sowohl zeitgesteuert als auch ereignisgesteuert arbeiten. Vorzugsweise werden dabei im zeitlichen Konfliktfall zeitgesteuerte Nachrichten bevorzugt behandelt, beispielsweise indem ereignisgesteuerte Nachrichten verzögert werden;
- der Transport der Daten erfolgt entsprechend dem TTEthernet Protokoll;
- in einem ereignisgesteuerten Computersystem ist zwischen der Switching Engine und zumindest einem, vorzugsweise mehreren oder insbesondere vorzugsweise zwischen jedem *Applikationsrechner* eine Kontrollleitung zum Austausch von Befehlen zwischen der Switching Engine und dem zumindest einen Applikationsrechner oder den mehreren oder allen Applikationsrechnern vorhanden, und zwischen dem Switching Speicher und jedem Applikationsspeicher ist eine DMA Einheit, die unter der Kontrolle der Switching Engine steht, angeordnet;
- zumindest ein Applikationsrechner, vorzugsweise alle Applikationsrechner, ist/sind als Multiprozessor System ausgebildet;
- alle Subsysteme der Verteilereinheit sind auf einem einzigen hochintegrierten VLSI Baustein implementiert.

Die vorliegende Erfindung wird im Folgenden an Hand der Zeichnung näher erklärt. In dieser zeigt
Fig. 1 eine dem Stand der Technik entsprechende Verteilereinheit,
Fig. 2 eine erweiterte zeitgesteuerte Verteilereinheit mit zwei Applikationsrechnern gemäß der Erfindung, und
Fig. 3 eine erweiterte ereignisgesteuerte Verteilereinheit mit zwei Applikationsrechnern gemäß der Erfindung.

Das folgende konkrete Beispiel behandelt eine der vielen möglichen Realisierungen der vorliegenden Erfindung.

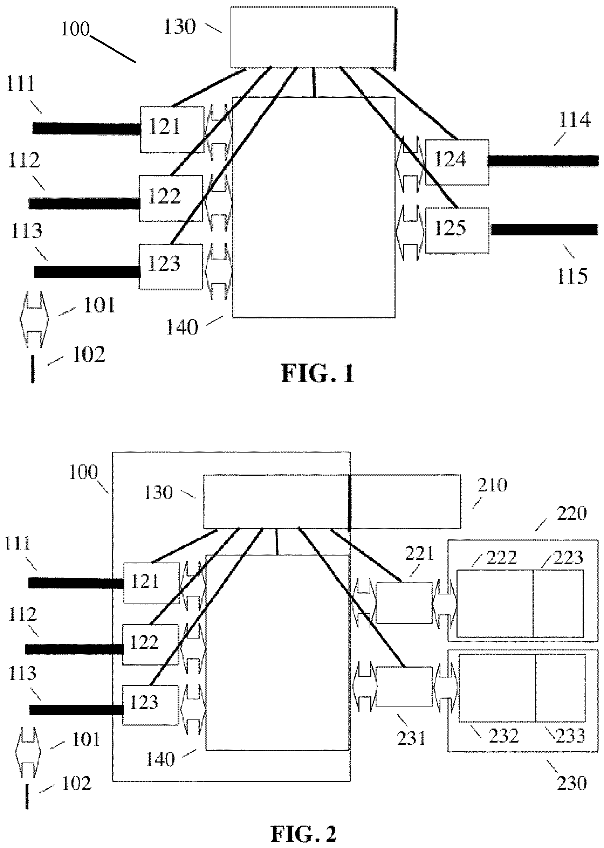

In den Figuren 1 bis 3 stellt das Symbol 101 die Datenleitungen zwischen zwei verbundenen Einheiten dar und das Symbol 102 die Kontrollleitungen zur Übertragung von Kontrollnachrichten.

In Fig. 1 ist die Struktur einer dem Stand der Technik entsprechenden Verteilereinheit dargestellt.

Eine dem Stand der Technik entsprechende Verteilereinheit 100 beinhaltet eine *Switching Engine (SE)* **130**, die die Verteilung der zu vermittelnden Daten vornimmt, und einen *Switching Speicher (SS)* **140**, in dem die eintreffenden Nachrichten zwischen dem Empfangszeitpunkt und dem Sendezeitpunkt zwischengespeichert werden. In Fig. 1 sind fünf bidirektionale Ports, die Ports **121**, **122**, **123**, **124** und **125** dargestellt, die die Endpunkte der entsprechenden Datenleitungen **111**, **112**, **113**, **114** und **115** zu den Knotenrechnern des verteilten Rechnersystems bilden.

Im Folgenden wird der Ablauf der Vermittlung einer Nachricht vom Port **121** zum Port **125** entsprechend dem Stand der Technik beschrieben. Wenn über die Leitung **111** eine Nachricht beim Port **121** eintrifft, so sendet der Port ein Kontrollsignal an die SE **130.** Die SE **130** entscheidet, in welchem Bereich des SS **140** die eintreffende Nachricht zwischen gespeichert werden soll. Anschließend analysiert die SE **130** den Header der eingetroffenen Nachricht um festzustellen, an welchen Ausgangsport, im Beispiel an den Port **125**, die Nachricht zu vermitteln ist. Wenn zu diesem Zeitpunkt der Port **125** belegt ist, so wird die Nachricht in eine Warteschlange eingereiht, so dass die Nachricht gesendet werden kann, sobald dieser Port **125** frei wird.

In der Folge wird zwischen zeitgesteuerten und ereignisgesteuerten Verfahren unterschieden. Ein Verfahren ist *zeitgesteuert,* wenn die Kontrollsignale zur Ausführung einer Aktion vom Fortschreiten einer globalen *sparse Zeitbasis* entsprechend einem a *priori erstellten Zeitplan* abgeleitet werden. Ein Verfahren ist ereignisgesteuert, wenn die Kontrollsignale zur Ausführung einer Aktion vom Auftreten eines Ereignisses, z.B. dem Eintreffen einer Nachricht, abgeleitet werden.

In einer zeitgesteuerten Verteilereinheit erfolgt, entsprechend dem Stand der Technik, die Vermittlung der Nachrichten auf der Basis eines *a priori* erstellten Zeitplans. Ein solcher Zeitplan (der Block **210** in Fig. 2) enthält die wiederkehrenden Zeitpunkte, zu denen eine periodische Nachricht am Port **121** eintreffen wird. In dem Zeitplan ist auch festgelegt, an welchen Ausgangsport (im Beispiel der Port **125**) und zu welchem Zeitpunkt der globalen Zeit die Nachricht zu vermitteln ist sowie die Dauer, während der der Port **125** durch das Senden dieser Nachricht belegt ist. Zusätzlich sind die Quell- und Zieladressen der zu transportierenden Nachrichten im Zeitplan enthalten. Da der Zeitplan **210** so erstellt wird, dass keine Konflikte auftreten können, erfolgt die Vermittlung der Nachricht ohne unvorhergesehene Verzögerungen.

Erfindungsgemäß wird nun die zeitgesteuerte Verteilereinheit durch die Applikationsrechner **220** und **230**, dargestellt in Fig. 2, wie folgt erweitert. Der Applikationsrechner **220** enthält den Applikationsspeicher AS **222** und die mindestens eine CPU **223**. Der Applikationsrechner **230** enthält den Applikationsspeicher AS **232** und die mindestens eine CPU **233**.

Die Applikationsrechner können Multiprozessor Systeme sein, d.h. ein Applikationsrechner kann über mehrere CPUs verfügen.

Der Applikationsspeicher AS **222** des Applikationsrechners **220** kann mittels einer *Direct Memory Access (DMA)* Einheit **221** Daten mit dem *Switching Speicher* SS **140** austauschen. Ebenso kann der Applikationsspeicher AS **232** des Applikationsrechners **230** mittels einer *Direct Memory Access (DMA)* Einheit **231** Daten mit dem *Switching Speicher* SS **140** austauschen.

Die DMA Einheit **221** steht unter der Kontrolle der SE **130**, d.h. die SE **130** einer zeitgesteuerten Verteilereinheit entscheidet auf der Basis eines *a priori* erstellten Zeitplans, während welcher Zeitintervalle ein Datenfluss zwischen dem SS **140** und dem AS **222** stattfindet und in welchen Speicherbereich des AS **222** eine zeitgesteuerte Nachricht abgelegt werden soll bzw. aus welchem Speicherbereich des AS **222** eine zu sendende Nachricht gelesen werden soll. Der *a priori* erstellte Zeitplan einer erfindungsgemäß erweiterten Verteilereinheit enthält somit neben den Zeitinformationen auch die Quell- und Zieladressen der über die DMA Einheit 221 zu transportierenden Daten.

Die DMA Einheit **231** steht ebenfalls unter der Kontrolle der SE **130.** Der Datentransfer zwischen dem SS **140** und dem AS **232** über die DMA Einheit **231** erfolgt wie im vorigen Absatz beschrieben.

Da eine DMA Einheit ein hohes Maß an Parallelität (z.B. 32 Bit parallel) unterstützt, ist das Zeitintervall, das für den Transport einer Nachricht vom SS **140** zum Applikationsrechner **220 -** das *Transportintervall* - benötigt wird, wesentlich kürzer als das Transportintervall zur Übertragung einer vergleichbaren Nachricht vom SS **140** über den Port **124** (Fig. 1) zu einem über die Datenleitung **114** angeschlossenen Knotenrechner des verteilten Systems. Während der Dauer des Transportintervalls darf keine CPU eines Applikationsrechners auf die durch den Transport betroffenen Daten zugreifen.

Die signifikante Verkürzung der Transportintervalle der Daten führt zu einer entsprechenden Verbesserung des Antwortzeitverhaltens des verteilten Computersystems.

Da in einem zeitgesteuerten System der Applikationsrechner **220** Zugriff auf die *sparse globale Zeitbasis* hat und den Zeitplan **210** der SE **130** kennt, wird die CPU **223** keinen Speicherzugriff auf einen Speicherbereich des AS **222** während der Transportintervalle vornehmen, während der ein Datentransfer zwischen diesem Speicherbereich des Speichers AS **222** und dem Speicher SS **140** auf Veranlassung der SE **130** durchgeführt wird. Das Gleiche gilt für den Applikationsrechner **230.** Durch diese Einschränkung wird die Integrität der übertragenen Daten gewährleistet.

Ein Applikationsrechner, z.B. der Applikationsrechner **220**, kann ein Multiprozessorsystem sein, das über mehrere CPUs verfügt. Während der Transportintervalle, während der ein DMA **221** Datentransfer zwischen dem Speicher AS **222** und dem SS **140** stattfindet, darf keine der mehreren CPUs **230** des Applikationsrechners **220** auf einen von der Datenübertragung betroffenen Speicherbereich des AS **222** zugreifen.

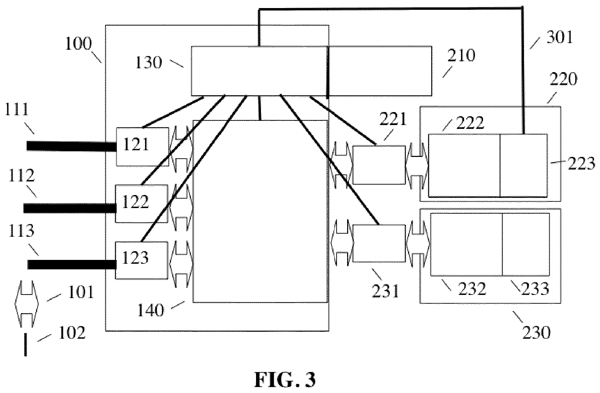

Figur 3 zeigt ein Beispiel, gemäß welchem der Applikationsrechner **220** ereignisgesteuert Nachrichten übertragen kann. Vorzugsweise kann der Applikationsrechner **220** zusätzlich auch zeitgesteuerte Nachrichten übertragen, wie oben beschrieben.

Wenn gemäß Figur 3 über die DMA Einheit **221** ereignisgesteuerte Nachrichten zwischen dem SS **140** und dem AS **222** ausgetauscht werden sollen, so wir eine zusätzliche Kontrollleitung **301** zwischen der SE **130** und der CPU **223** des Applikationsrechners **220** vorgesehen.

Über diese Kontrollleitung **301** kann die SE **130** der CPU **223** des Applikationsrechner **220** mitteilen, dass eine im SS **130** eingetroffene ereignisgesteuerte Nachricht an den Applikationsrechner **220** zu vermitteln ist. Die CPU **223** teilt in der Folge der SE **130** mit, in welchen Speicherbereich des AS **222** die eintreffende Nachricht über die DMA Einheit **221**, die unter der Kontrolle der SE **130** steht, geschrieben werden soll und unterlässt einen Zugriff auf diesen Speicherbereich des AS **222** während des Transportintervalls, d.h. bis der Nachrichtentransport abgeschlossen ist.

Wenn die CPU **223** eine ereignisgesteuerte Nachricht über die Verteilereinheit zu versenden hat, dann wird der SE **130** über die Kontrollleitung **301** mitgeteilt, in welchem Speicherbereich des AS **222** die Nachricht vorliegt. In der Folge veranlasst die SE **130**, dass die DMA Einheit **221** die Daten von diesem Speicherbereich des AS **222** in den SS **140** transportiert.

In dem gezeigten Beispiel gemäß Figur 3 ist lediglich zwischen der CPU **223** und der SE **130** eine Kontrollleitung **301** vorgesehen. Es kann aber auch zwischen der CPU **233** und der SE **130** eine (nicht dargestellte) Kontrollleitung vorgesehen sein, sodass auch der Applikationsrechner **230** ereignisgesteuert Nachrichten übertragen kann.

Erfindungsgemäß kann die erweiterte Verteilereinheit die Nachrichten entsprechend dem TTEthernet Protokoll [5] versenden. Das TTEthernet Protokoll ermöglicht den Transport von zeitgesteuerten und ereignisgesteuerten Nachrichten. Eine auf TTEthernet basierte erweiterte Verteilereinheit kann sowohl zeitgesteuerte wie auch ereignisgesteuerte Nachrichten verarbeiten.

Die Fortschritte der VLSI Integration ermöglichen die Implementierung aller Subsysteme der erweiterten Verteilereinheit, das sind die *Switching Engine (SE), die Ports,* der *Switching Speicher (SE), die DMA Einheiten* und einen oder mehrere *Applikationsrechner* mit ihren Speichern auf einem einzigen hochintegrierten VLSI Baustein. Durch die Hochintegration ergeben sich bei großen Stückzahlen wesentliche wirtschaftliche Vorteile.

### Zitierte Literatur:

[1] US 7,535,898
[2] US 7,870,306
[3] US 4,970,721
[4] Kopetz, H. Real-Time Systems, Design Principles for Distributed Embedded Applications. Springer Verlag. 2011.
[5] SAE Standard von TT Ethernet. URL: http://standards.sae.org/as6802

## Patentansprüche

1. Verfahren zur Verarbeitung von Echtzeitdaten in einer Verteilereinheit eines verteilten Computersystems, welches Computersystem eine Vielzahl von Knotenrechnern und Verteilereinheiten umfasst, wobei die Verteilereinheit zusätzlich zu einer Switching Engine (130) und einem Switching Speicher (140) einen oder mehrere Applikationsrechner (220, 230) mit je einer oder mehreren Applikationszentraleinheiten (223, 233) und Applikationsspeichern (222, 232) enthält, wobei
die Switching Engine (130) der Verteilereinheit bei Eintreffen einer für einen Applikationsrechner bestimmten Nachricht an einem ihrer Ports (121, 122, 123) diese Nachricht über eine Direct Memory Access, DMA, Einheit (221, 231), die zwischen dem Switching Speicher (140) und dem Applikationsspeicher (222, 232) des adressierten Applikationsrechners (220, 230) angeordnet ist und unter der Kontrolle der Switching Engine (130) steht, an den adressierten Applikationsrechner (220, 230) weiterleitet, **dadurch gekennzeichnet, dass** das Computersystem ein zeitgesteuertes Computersystem ist, und die Switching Engine (130) und alle Applikationsrechner (220, 230) Zugriff auf eine globale sparse Zeitbasis haben, wobei die Switching Engine der Verteilereinheit zu den in einem a priori erstellten Zeitplan enthaltenen globalen Zeitpunkten an eine zwischen dem Switching Speicher und einem Applikationsrechner angeordnete DMA Einheit (221, 231) bzw. an jede der zwischen dem Switching Speicher und einem Applikationsrechner angeordneten DMA Einheiten (221, 231) den Befehl zum Start eines DMA Transfers von Daten aus dem Switching Speicher zu einem Applikationsspeicher und zum Start eines DMA Transfers von Daten aus einem Applikationsspeicher zu dem Switching Speicher ausgibt.

2. Verfahren nach Anspruch 1, **dadurch gekennzeichnet, dass** die Quell- und Zieladressen der Daten, die von der DMA zwischen dem Switching Speicher und einem Applikationsspeicher oder umgekehrt zu transportieren sind, in einem Zeitplan der Switching Engine enthalten sind.

3. Verfahren nach Anspruch 1 oder 2, **dadurch gekennzeichnet, dass** keine CPU (223, 233) eines Applikationsrechners (220, 230) während Transportintervallen einen Zugriff auf den vom Transport betroffen Bereich seines Speichers vornimmt.

4. Verfahren nach einem der Ansprüche 1 bis 3, **dadurch gekennzeichnet, dass** in der Verteilereinheit sowohl zeitgesteuerte als auch ereignisgesteuerte Nachrichten transportiert und verarbeitet werden.

5. Verfahren nach einem der Ansprüche 1 bis 4, **dadurch gekennzeichnet, dass** der Transport der Daten entsprechend dem TTEthernet Protokoll erfolgt.

6. Verteilereinheit zur Bearbeitung von Echtzeitdaten in einem verteilten Computersystem, wobei das Computersystem eine Vielzahl von Knotenrechnern und Verteilereinheiten umfasst, wobei die Verteilereinheit zusätzlich zu einer Switching Engine (130) und einem Switching Speicher (140) eine oder mehrere Applikationsrechner (220, 230) mit je einer oder mehreren Applikationszentraleinheiten (223, 233) und Applikationsspeichern (222, 232) enthält, wobei
zwischen dem Switching Speicher (140) der Verteilereinheit und den Applikationsspeichern (222, 232) der Applikationsrechner (220, 230) DMA Einheiten (221, 231) angeordnet sind, wobei Kontrollleitungen von der Switching Engine (130) der Verteilereinheit zu jeder DMA Einheit führen, wobei über diese Kontrollleitungen von der Switching Engine (130) Befehle an die DMA Einheiten (221, 231) zum DMA-Transfer von Speicherbereichen des Switching Speichers (140) zu Speicherbereichen eines Applikationsspeichers und zum Transfer von Speicherbereichen des Applikationsspeichers zu Speicherbereichen des Switching Speichers (140) transportiert werden können,
**dadurch gekennzeichnet, dass** das Computersystem ein zeitgesteuertes Computersystem ist, und die Switching Engine (130) und alle Applikationsrechner (220, 230) Zugriff auf eine globale sparse Zeitbasis haben, wobei
die Switching Engine der Verteilereinheit eingerichtet ist, zu den in einem
a priori erstellten Zeitplan enthaltenen globalen Zeitpunkten an eine zwischen dem Switching Speicher und einem Applikationsrechner angeordnete DMA Einheit (221, 231) bzw. an jede der zwischen dem Switching Speicher und einem Applikationsrechner angeordneten DMA Einheiten (221, 231) den Befehl zum Start eines DMA Transfers von Daten aus dem Switching Speicher zu einem Applikationsspeicher und zum Start eines DMA Transfers von Daten aus einem Applikationsspeicher zu dem Switching Speicher auszugeben.

7. Verteilereinheit nach Anspruch 6, **dadurch gekennzeichnet, dass** zumindest ein Applikationsrechner, vorzugsweise alle Applikationsrechner, als Multiprozessor System ausgebildet ist/sind.

8. Verteilereinheit nach Anspruch 6 oder 7, **dadurch gekennzeichnet, dass** alle Subsysteme der Verteilereinheit auf einem einzigen hochintegrierten VLSI Baustein implementiert sind.

9. Computersystem umfassend eine Vielzahl von Knotenrechnern und Verteilereinheiten, **dadurch gekennzeichnet, dass** das Computersystem ein oder mehrere Verteilereinheiten nach einem der Ansprüche 6 bis 8 umfasst, oder **dadurch gekennzeichnet, dass** alle Verteilereinheiten nach einem der Ansprüche 6 bis 8 ausgebildet sind.

## Claims

1. A method for processing real-time data in a distribution unit of a distributed computer system, said computer system comprising node computers and at least one distribution unit, said distribution unit containing, in addition to a switching engine (130) and a switching memory (140), one or more application computers (220, 230) having each one or more application central processing units (223, 233) and application memories (222, 232), wherein the switching engine (130) of the distribution unit, upon receiving a message intended for an application computer at one of its ports (121, 122, 123), forwards the message to the addressed application computer (220, 230) via a direct memory access (DMA) unit (221, 231), which is arranged between the switching memory (140) and the application memory (222, 232) of the addressed application computer (220, 230) and is controlled by the switching engine (130), **characterized in that**
the computer system is a time-triggered computer system, and
the switching engine (130) and all application computers (220, 230) have access to a global sparse time base, wherein the switching engine of the distribution unit issues, at the global time points contained in a schedule created *a priori,* to a DMA unit (221, 231) arranged between the switching memory and an application computer or to each of the DMA units (221, 231) arranged between the switching memory and an application computer, the command instructing to start a DMA transfer of data from the switching memory to an application memory and to start a DMA transfer of data from an application memory to the switching memory.

2. The method of claim 1, **characterized in that** the source and destination addresses of the data that the DMA is to transport between the switching memory and an application memory, or vice versa, are contained in a schedule of the switching engine.

3. The method of claim 1 or 2, **characterized in that** during transport intervals no CPU (223, 233) of an application computer (220, 230) accesses the area of its memory that is affected by the transport.

4. The method of any one of claims 1 to 3, **characterized in that** both time-triggered and event-driven messages are transported and processed in the distribution unit.

5. The method of any one of claims 1 to 4, **characterized in that** the transport of data is performed according to the TTEthernet protocol.

6. A distribution unit for processing real-time data in a distributed computer system, the computer system comprising node computers and distribution units, said distribution unit containing, in addition to a switching engine (130) and a switching memory (140), one or more application computers (220, 230) having each one or more application central processing units (223, 233) and application memories (222, 232), wherein
DMA units (221, 231) are arranged between the switching memory (140) of the distribution unit and the application memories (222, 232) of the application computers (220, 230), wherein control lines running from the switching engine (130) of the distribution unit to each DMA unit, said control lines enabling to transport commands from the switching engine (130) to the DMA units (221, 231), for DMA transfer from memory areas of the switching memory (140) to memory areas of an application memory and for transfer of memory areas of the application memory to memory areas of the switching memory (140),
**characterized in that**
the computer system is a time-triggered computer system, and
the switching engine (130) and all application computers (220, 230) have access to a global sparse time base, wherein the switching engine of the distribution unit is configured to issue, at the global time points contained in a schedule created *a priori,* to a DMA unit (221, 231) arranged between the switching memory and an application computer or to each of the DMA units (221, 231) arranged between the switching memory and an application computer, the command instructing to start a DMA transfer of data from the switching memory to an application memory and to start a DMA transfer of data from an application memory to the switching memory.

7. The distribution unit of claim 6, **characterized in that** at least one application computer, preferably all application computers, is/are realized as multiprocessor systems.

8. The distribution unit according to claim 6 or 7, **characterized in that** all subsystems of the distribution unit are implemented on a single highly integrated VLSI chip.

9. A computer system comprising a plurality of node computers and distribution units, **characterized in that** the computer system comprises one or more distribution units according to any one of claims 6 to 8, or **characterized in that** all distribution units are according to any one of claims 6 to 8.

## Revendications

1. Procédé de traitement de données en temps réel dans une unité de distribution d'un système informatique réparti, ledit système informatique comprenant une pluralité d'ordinateurs nodaux et d'unités de distribution, ladite unité de distribution contenant, en plus d'une machine de commutation (130) et d'une mémoire de commutation (140), un ou plusieurs ordinateurs d'application (220, 230) ayant chacun une ou plusieurs unités centrales d'application (223, 233) et mémoires d'application (222, 232), dans lequel
la machine de commutation (130) de l'unité de distribution, lorsqu'à l'un de ses ports (121, 122, 123) un message destiné à un ordinateur d'application arrive, envoie ledit message à l'ordinateur d'application adressé (220, 230) via une unité d'accès direct à la mémoire, DMA, (221, 231) qui est disposée entre la mémoire de commutation (140) et la mémoire d'application (222, 232) de l'ordinateur d'application adressé (220, 230) et est sous le contrôle de la machine de commutation (130), 230),
**caractérisé en ce que**
le système informatique est un système informatique à commande temporelle, et la machine de commutation (130) et tous les ordinateurs d'application (220, 230) ont accès à une base de temps globale clairsemée, la machine de commutation de l'unité de distribution, aux moments de temps globale contenus dans un programme généré a priori, émet à une unité DMA (221, 231) disposée entre la mémoire de commutation et un ordinateur d'application ou à chacune des unités DMA (221, 231) disposées entre la mémoire de commutation et un ordinateur d'application, émet l'ordre de démarrer un transfert DMA de données de la mémoire de commutation vers une mémoire d'application et de démarrer un transfert DMA de données d'une mémoire d'application vers la mémoire de commutation.

2. Procédé selon la revendication 1, **caractérisé en ce que** les adresses de source et de destination des données à transporter par le DMA entre la mémoire de commutation et une mémoire d'application ou inversement sont contenues dans un programme de la machine de commutation.

3. Procédé selon la revendication 1 ou 2, **caractérisée en ce qu'**aucune unité centrale (223, 233) d'un ordinateur d'application (220, 230) n'effectue un accès à la zone de sa mémoire affectée par le transport pendant les intervalles de transport.

4. Procédé selon l'une quelconque des revendications 1 à 3, **caractérisée en ce que** dans l'unité de distribution des messages à commande temporelle et à commande événementielle sont transportés et traités.

5. Procédé selon l'une quelconque des revendications 1 à 4, **caractérisée en ce que** le transport des données est effectué selon le protocole TTEthernet.

6. Unité de distribution pour traiter des données en temps réel dans un système informatique distribué, le système informatique comprenant une pluralité d'ordinateurs nodaux et d'unités de distribution, l'unité de distribution contenant, en plus d'une machine de commutation (130) et d'une mémoire de commutation (140), un ou plusieurs ordinateurs d'application (220, 230) ayant chacun une ou plusieurs unités centrales d'application (223, 233) et des mémoires d'application (222, 232), dans laquelle
les unités DMA (221, 231) sont disposées entre la mémoire de commutation (140) de l'unité de distribution et les mémoires d'application (222, 232) des ordinateurs d'application (220, 230), des lignes de commande de la machine de commutation (130) de l'unité de distribution menant à chaque unité DMA, des ordres étant transmis de la machine de commutation (130) aux unités DMA (221, 231) par ces lignes de commande pour le transfert DMA de zones de mémoire de la mémoire de commutation (140) vers des zones de mémoire d'une mémoire d'application et pour le transfert de zones de mémoire de la mémoire d'application vers des zones de mémoire de la mémoire de commutation (140),
**caractérisé en ce que**
le système informatique est un système informatique à commande temporelle, et la machine de commutation (130) et tous les ordinateurs d'application (220, 230) ont accès à une base de temps globale clairsemée, la machine de commutation de l'unité de distribution étant conçu pour émettre à une unité DMA (221, 231) disposée entre la mémoire de commutation et un ordinateur d'application ou à chacune des unités DMA (221, 231) disposées entre la mémoire de commutation et un ordinateur d'application, émet l'ordre de démarrer un transfert DMA de données de la mémoire de commutation vers une mémoire d'application et de démarrer un transfert DMA de données d'une mémoire d'application vers la mémoire de commutation.

7. Unité de distribution selon la revendication 6, **caractérisée en ce qu'**au moins un ordinateur d'application, de préférence tous les ordinateurs d'application, est/sont conçu(s) comme système multiprocesseur.

8. Unité de distribution selon la revendication 6 ou 7, **caractérisée en ce que** tous les sous-systèmes de l'unité de distribution sont implémentés sur un seul dispositif VLSI hautement intégré.

9. Système informatique comprenant une pluralité d'ordinateurs nodaux et d'unités de distribution, **caractérisé en ce que** le système informatique comprend une ou plusieurs unités de distribution selon l'une quelconque des revendications 6 à 8, ou **caractérisé en ce que** toutes les unités de distribution sont conçues selon l'une quelconque des revendications 6 à 8.
